# EUROPÄISCHE PATENTANMELDUNG

(11) **EP 0 855 775 A2**
(43) Veröffentlichungstag der Anmeldung: **29.07.1998**
(21) Anmeldenummer: 98100257.9
(22) Anmeldetag: 09.01.1998
(51) Int. Cl.: H02G 3/18

(54) **Unterputzinstallationsvorrichtung**

(30) Priorität: 10.01.1997 DE 19700574
(71) Anmelder: Strupatis, Axel, 47198 Duisburg (DE)
(72) Erfinder: Strupatis, Axel, 47198 Duisburg (DE)
(74) Vertreter: Patentanwälte Hauck, Graalfs, Wehnert, Döring, Siemons

(57) **Zusammenfassung**

Es wird eine Unterputzinstallationsvorrichtung, insbesondere Steckdose, beschrieben, die einen Befestigungsrahmen mit hiermit verbundenen Befestigungseinrichtungen, der und die aus einem elektrisch leitenden Material bestehen, und eine Schutzleitereinrichtung aufweist. Zwischen dem Befestigungsrahmen und der Schutzleitereinrichtung ist eine elektrisch leitende Verbindung vorgesehen, um zu verhindern, daß am Befestigungsrahmen und/oder den Befestigungseinrichtungen hohe Berührungsspannungen verbleiben, wenn die Befestigungseinrichtungen bei der Installation der Unterputzinstallationsvorrichtung unbeabsichtigt mit elektrischen Leitern in Kontakt treten.

## Beschreibung

Die vorliegende Erfindung betrifft eine Unterputzinstallationsvorrichtung, insbesondere Steckdose, mit einem Befestigungsrahmen mit hiermit verbundenen Befestigungseinrichtungen, der und die aus einem elektrisch leitenden Material bestehen, und einer Schutzleitereinrichtung.

Derartige Unterputzinstallationsvorrichtungen sind in der Form von Steckdosen, Schalterdosen u. dgl. bekannt und werden in Wänden unter Putz installiert, um elektrische Anschlußmöglichkeiten zu schaffen. Sie weisen einen Befestigungsrahmen auf, der einerseits die Stromanschlußeinrichtungen und Schutzleitereinrichtungen trägt und andererseits zur Befestigung der Vorrichtung in einer in einer Wand eingesetzten Schalterdose dient. Hierzu ist der Befestigungsrahmen mit speziellen Befestigungseinrichtungen versehen, die den Befestigungsrahmen an der in das Mauerwerk eingesetzten Schalterdose fixieren. Diese Befestigungseinrichtungen sind in der Regel als sogenannte Einbaukrallen ausgebildet. Durch das Festschrauben werden die Krallen auseinander gespreizt und krallen sich an der Innenseite der Schalterdose fest.

Aus Stabilitätsgründen sind der Befestigungsrahmen und die zugehörigen Befestigungseinrichtungen aus metallischen Werkstoffen, d. h. elektrisch leitenden Materialien, hergestellt. Kunststoffe werden hierfür nicht verwendet.

Die Installation von derartigen Unterputzinstallationsvorrichtungen geht in der Regel problemlos vonstatten. Es kann jedoch manchmal vorkommen, daß beim Einbau von derartigen Steckdosen, d. h. beim Auseinanderspreizen der metallischen Einbaukrallen, diese gegen verlegte elektrische Leiter stoßen und deren Isolation durchbrechen, durchtrennen oder durchscheuern. Dies wird in vielen Fällen vom Installateur nicht bemerkt, so daß nach dem Verlegen der Steckdose und Einschalten des Stromnetzes Spannung an den Befestigungseinrichtungen (Einbaukrallen) und damit am Befestigungsrahmen liegt. Es versteht sich, daß hiermit ein außerordentlich gefährlicher Zustand erzeugt wird, der zu schweren Unfällen führen kann, beispielsweise beim nachfolgenden Tapezieren der Wand, bei dem durch das Aufbringen der nassen Tapete die gesamte Wand unter Spannung gesetzt werden kann.

Der Erfindung liegt die Aufgabe zugrunde, eine Unterputzinstallationsvorrichtung, insbesondere Steckdose, der eingangs beschriebenen Art zu schaffen, mit der verhindert wird, daß Befestigungseinrichtungen und Befestigungsrahmen unter hohen Spannungen verbleiben, wenn die Befestigungseinrichtungen mit verlegten elektrischen Leitern in Kontakt treten.

Diese Aufgabe wird erfindungsgemäß bei einer Unterputzinstallationsvorrichtung der eingangs beschriebenen Art dadurch gelöst, daß sie eine elektrisch leitende Verbindung zwischen Befestigungsrahmen und/oder Befestigungseinrichtungen und Schutzleitereinrichtung aufweist.

Wie eingangs erwähnt, besitzen derartige Unterputzinstallationsvorrichtungen eine Schutzleitereinrichtung, die in der Regel als Schutzleiterbügel ausgebildet und am aus Isolationsmaterial bestehenden Fassungshalter montiert ist. Die Erfindung sieht nunmehr vor, daß eine elektrisch leitende Verbindung zwischen dieser Schutzleitereinrichtung und dem Befestigungsrahmen und/oder den Befestigungseinrichtungen hergestellt wird, so daß im Fall eines Kontaktes der Befestigungseinrichtungen mit einem elektrischen Leiter beim Verlegen der Unterputzinstallationsvorrichtung ein durch die Befestigungseinrichtungen und den Befestigungsrahmen fließender Strom zur Schutzleitereinrichtung hin abgeleitet wird. Auf diese Weise können die vorstehend geschilderten Probleme nicht auftreten.

Vorzugsweise ist die erfindungsgemäß vorgesehene elektrisch leitende Verbindung durch einen Verbindungssteg realisiert, der zwischen Befestigungsrahmen und Schutzleitereinrichtung angeordnet ist. Dieser Verbindungssteg kann beispielsweise aus dem gleichen Material wie der Befestigungsrahmen und der Schutzleiter bestehen und mit diesen verbunden sein, beispielsweise durch Anpunkten, Anheften, Anklemmen etc.

Bei den bekannten Unterputzinstallationsvorrichtungen weist der Befestigungsrahmen normalerweise eine Tragplatte auf, die beim Installieren der Vorrichtung gegen die umgebende Wand gepreßt wird. Von dieser Tragplatte erstrecken sich senkrecht zu ihrer Ebene Haltezungen, an denen die zum Befestigen der Vorrichtung dienenden Einbaukrallen vorgesehen sind. Eine bevorzugte Ausführungsform der erfindungsgemäßen Unterputzinstallationsvorrichtung zeichnet sich nunmehr dadurch aus, daß die elektrisch leitende Verbindung aus einem nach hinten aus der Ebene der Tragplatte heraus gebogenen und mit der Schutzleitereinrichtung verbundenen Tragplattensteg besteht. Bei dieser Ausführungsform stellt die elektrisch leitende Verbindung somit einen Teil der Tragplatte dar, so daß die Herstellung wesentlich vereinfacht wird. Dieser Tragplattensteg muß nur noch mit der Schutzleiteroinrichtung verbunden werden.

Die Schutzleitereinrichtung ist bei derartigen Vorrichtungen in der Regel als Schutzleiterbügel ausgebildet, der am mittigen Fassungshalter befestigt ist und von dem sich zwei elastische Kontaktzungen aus der Ebene der Tragplatte heraus erstrecken. Der erfindungsgemäß vorgesehene Verbindungssteg ist vorzugsweise an den Schutzleiterbügel angeschlossen, und zwar derart, daß hierdurch die Elastizität der Kontaktzungen des Schutzleiterbügels nicht beeinträchtigt wird. Vorzugsweise ist daher der Verbindungssteg an den parallel zur Tragplatte verlaufenden Befestigungsabschnitt des Schutzleiterbügels angeschlossen.

Der Verbindungssteg ist vorzugsweise an die Schutzleitereinrichtung geklemmt oder punktgeschweißt.

Die Erfindung wird nachfolgend anhand eines Auführungsbeispieles in Verbindung mit der Zeichnung im einzelnen erläutert. Es zeigen:
Figur 1 eine Draufsicht auf eine Steckdose (nur Unterputzteil); und
Figur 2 eine Seitenansicht der Steckdose der Figur 1.

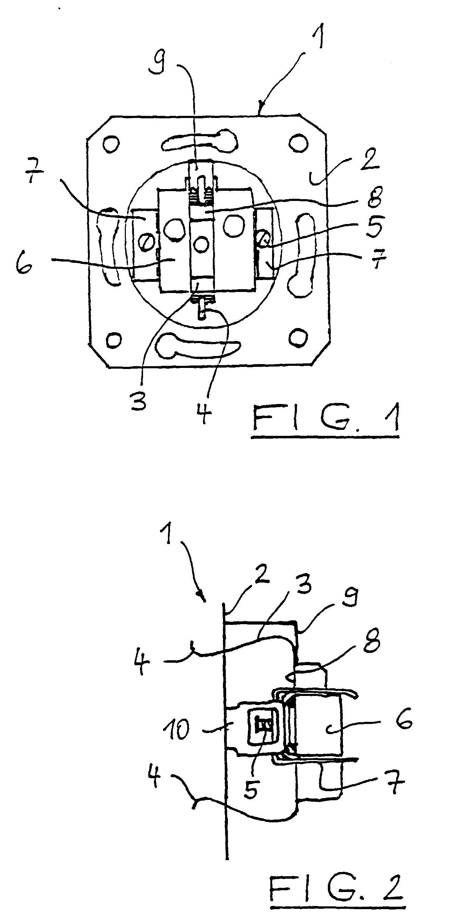

Die in den Figuren 1 und 2 gezeigte Steckdose 1 (in den Figuren ist nur der Unterputzteil der Steckdose gezeigt, der Überputzteil spielt für die Erfindung keine Rolle) ist handelsüblich und besitzt einen als Tragplatte ausgebildeten Befestigungsrahmen 2 aus einem metallischen Werkstoff, der den Fassungsträger 6 (nur schematisch gezeigt) der Dose trägt und Einbaukrallen 7 zur Fixierung der Dose in einer in ein Loch in einer Wand eingesetzten Schalterdose aufweist. Hierzu erstrecken sich aus der Ebene der Tragplatte heraus rechtwinklig zu dieser seitlich zwei Zungen 10, die den Fassungsträger 6 halten und gleichzeitig Aufnahmen für die Einbaukrallen 7 bilden. Durch Eindrehen einer der Einbaukralle 7 zugeordneten Schraube 5 werden die beiden Schenkel einer Kralle in Figur 2 senkrecht zur Blattebene bewegt und auf diese Weise gegen die Wandung einer zugehörigen Schalterdose gepreßt.

Des weiteren trägt der Befestigungsrahmen 2 mit der Tragplatte einen Schutzleiterbügel 3, der einen ebenen Befestigungsabschnitt 8 und zwei sich durch die Öffnung der Tragplatte erstreckende Kontaktzungen 4 aufweist. Ein geeigneter Anschluß für den Schutzleiter ist nicht dargestellt.

Die weiteren Bestandteile der Steckdose sind in den Figuren 1 und 2 nur schematisch angedeutet und spielen für die Erfindung keine Rolle.

Wenn beim Verlegen der Steckdose die beiden Einbaukrallen durch Anziehen der Schrauben 5 in Figur 1 seitlich nach außen bewegt werden, um die Dose an der Schalterdose zu fixieren, können sie mit verlegten elektrischen Leitern in Kontakt treten und deren Isolation durchtrennen. Da die Einbaukrallen 7, die diese halternden Zungen 10 und die Tragplatte, d. h. somit der gesamte Befestigungsrahmen 2, aus Festigkeits- bzw. Stabilitätsgründen aus Metall bestehen, werden diese Teile unter Strom gesetzt, wenn am elektrischen Leiter Spannung liegt. Um hierfür Abhilfe zu schaffen, weist der Befestigungsrahmen 2 eine elektrisch leitende Verbindung mit dem Schutzleiterbügel 3 auf. Im einzelnen erstreckt sich hierzu ein Verbindungssteg 9 von der Tragplatte senkrecht zu deren Ebene nach hinten. Dieser Verbindungssteg 9 ist einstückig mit der Tragplatte verbunden und winklig ausgebildet, wobei sich sein parallel zur Tragplattenebene verlaufender Schenkel bis zum Befestigungsabschnitt 8 des Schutzleiterbügels 3 erstreckt und mit diesem, beispielsweise über eine Punktschweißung, verbunden ist. Damit ist der gesamte Befestigungsrahmen 2 einschließlich seiner Befestigungseinrichtungen (Einbaukrallen) an den Schutzleiter angeschlossen, so daß der Befestigungsrahmen nicht mehr unter zu hohen Berührungsspannungen steht.

## Patentansprüche

1. Unterputzinstallationsvorrichtung, insbesondere Steckdose, mit einem Befestigungsrahmen mit hiermit verbundenen Befestigungseinrichtungen, der und die aus einem elektrisch leitenden Material bestehen, und einer Schutzleitereinrichtung, dadurch gekennzeichnet, daß sie eine elektrisch leitende Verbindung zwischen Befestigungsrahmen (2) und/oder Befestigungseinrichtungen und Schutzleitereinrichtung (3) aufweist.

2. Unterputzinstallationsvorrichtung nach Anspruch 1, dadurch gekennzeichnet, daß zwischen Befestigungsrahmen (2) und Schutzleitereinrichtung (3) ein Verbindungssteg (9) angeordnet ist.

3. Unterputzinstallationsvorrichtung nach Anspruch 2, bei der der Befestigungsrahmen eine Tragplatte umfaßt, dadurch gekennzeichnet, daß die elektrisch leitende Verbindung aus einem nach hinten aus der Ebene der Tragplatte heraus gebogenen und mit der Schutzleitereinrichtung (3) verbundenen Tragplattensteg besteht.

4. Unterputzinstallationsvorrichtung nach Anspruch 2 oder 3, dadurch gekennzeichnet, daß der Verbindungssteg (9) an den Schutzleiterbügel (bei 8) angeschlossen ist.

5. Unterputzinstallationsvorrichtung nach einem der Ansprüche 2 - 4, dadurch gekennzeichnet, daß der Verbindungssteg (9) an die Schutzleitereinrichtung (3) geklemmt oder punktgeschweißt ist.
